# EUROPÄISCHE PATENTSCHRIFT

(11) **EP 0 359 698 B1**
(45) Veröffentlichungstag und Bekanntmachung des Hinweises auf die Patenterteilung: **22.12.1993**
(21) Anmeldenummer: 89710034.3
(22) Anmeldetag: 27.04.1989
(51) Int. Cl.: B01F 3/04, C02F 1/20

(54) **Gasverteiler, insbesondere Luftverteiler zum feinblasigen Belüften von Wasser**
Fine-bubble diffuser, especially for water aeration
Diffuseur à bulles fines, spécialement pour l'aération de l'eau

(30) Priorität: 20.06.1988 DE 8807929 U
(43) Veröffentlichungstag der Anmeldung: 21.03.1990
(73) Patentinhaber: Messner, Rudolf, D-91325 Adelsdorf (DE)
(72) Erfinder: Messner, Rudolf, D-91325 Adelsdorf (DE)
(74) Vertreter: Hafner, Dieter, Dr.rer.nat., Dipl.-Phys.

(56) Entgegenhaltungen:
- EP-A- 0 171 452
- DE-A- 3 441 731
- DE-A- 3 509 848
- US-A- 2 978 234

## Beschreibung

Die Erfindung betrifft einen Gasverteiler, insbesondere Luftverteiler mit den Merkmalen des Oberbegriffs des Patentanspruchs 1.

Ein Luftverteiler zum feinblasigen Belüften von Wasser, insbesondere zur Verwendung in biologischen Abwasser-Reinigungsanlagen, ist bereits aus der europäischen Patentanmeldung 0171452 bekannt, wobei dieser Luftverteiler eine über einer festen Platte angeordnete Membrane (=gelochte Luftverteiler-Folie) aufweist, die an ihren Rändern mittels Randleisten dicht mit der festen Platte verbunden ist, und wobei ferner über der Membrane als niederhaltende Elemente Stegleisten angeordnet sind, welche direkt mit der festen Platte verbunden sind. Bei diesem bekannten Luftverteiler besteht die feste Platte z. B. aus Kunststoff oder Asbestzement und die Stegleisten bestehen aus Kunststoff.

Zum gasdichten Verbinden der Membrane an ihren Rändern mit der Unterlage in der Form der festen Platte sind die bereits erwähnten, als Dichtungselemente fungierenden Randleisten erforderlich, wobei die Verbindung zwischen diesen Randleisten, der Membrane und gegebenenfalls auch der Stegleisten mit der festen Platte durch selbstschneidende Schrauben oder durch Nieten erfolgt, unter Umständen aber auch dadurch, daß Klammern vorgesehen sind, welche in Abständen den Rand der festen Platte mit der zugehörigen, darüber angeordneten Randleiste und dem dazwischenliegenden Randbereich der Membrane umgreifen.

Aus der vorgenannten Druckschrift sowie aus dem Dokument US-A-2 978 234 ergibt sich ferner, daß die Klammern zusätzlich mit der festen Platte verschraubt oder vernietet sein können.

Darüber hinaus ist es bekannt, bei Systemen wie z. B. "Folie/Folie" oder "Folie/Platte" die randseitigen Verbindungen mittels Vulkanisation oder Verklebung zu realisieren.

Die bei dem Luftverteiler gemäß der o. g. europäischen Patentanmeldung vorgesehene Verbindung zwischen fester Platte, Membrane und Randleisten, welche als Dichtungen dienen, ist jedoch verhältnismäßig material-, herstellungs- und montageaufwendig, und stellt daher noch keine in jeder Beziehung befriedigende Lösung der Verbindungsproblematik dar.

Verbindungen mittels Vulkanisation oder Verklebung sind jedoch in vielen Fällen aufgrund der verwendeten Materialien nicht möglich oder von vorneherein nicht erwünscht.

Der vorliegenden Erfindung liegt daher die Aufgabe zugrunde, einen Gas-, insbesondere Luftverteiler mit den Merkmalen des Oberbegriffs des Patentanspruchs 1 zu schaffen und diesen Verteiler in der Weise auszubilden, daß er einen verhältnismäßig geringen Konstruktions- und Fertigungsaufwand erfordert und daß Montage bzw. Demontage sowie Wartung rasch und einfach erfolgen können, wobei einerseits eine sehr gut gasabdichtende Funktion seiner Verbindungsvorrichtung und andererseits eine rasche und einfache Austauschbarkeit der Membrane gewährleistet sein sollen.

### Beschreibungsseite 17

Diese Aufgabe wird durch die kennzeichnenden Merkmale der Ansprüche 1 bzw. 31 gelöst, wobei zweckmäßige Weiterbildungen durch die in den Unteransprüchen wiedergegebenen Merkmale gekennzeichnet sind.

Eine sehr günstige Ausbildung ergibt sich beispielsweise gemäß Anspruch 2 dadurch, daß das jeweilige Klemmsitz-Profildichtungselement als eine im wesentlichen U-förmige Klemmsitz-Profildichtungsleiste oder -Profilschiene ausgebildet ist, welche zum Umgreifen einer jeweils oberen und unteren Umfangsrandkante des Grundelements mit dem darüber geschlagenen Randbereich der Membrane dient.

Eine andere, vorteilhafte Ausgestaltung der Erfindung ergibt sich aber auch gemäß Anspruch 3 durch eine derartige Ausbildung des jeweiligen Klemmsitz-Profildichtungselements, daß dieses mit einer entsprechenden in dem jeweiligen Randbereich des Grundelements ausgesparten Nut in Eingriff bringbar ist, in welche zuvor der zugeordnete Randbereich der Membrane ganz oder teilweise eingefügt ist.

In jedem Falle führt die Verbindungsvorrichtung zu einer festklemmenden und gleichzeitig abdichtenden Verbindung, wobei im Falle zunehmender Zugbeanspruchung dieser Klemmverbindung, beispielsweise aufgrund der sich aufwölbenden elastischen Membrane bei zunehmendem Gasdruck sich die erwünschte Klemmwirkung sogar noch in vorteilhafter Weise verstärkt.

Eine für bestimmte Anwendungsfälle außerordentlich günstige Weiterbildung der Erfindung besteht darin, daß die Verbindungsvorrichtung insgesamt als ein Bauteilsatz ausgebildet ist, welcher mit mindestens zwei Klemmsitz-Profildichtungsleisten oder -schienen pro Randbereich bestückt ist, wobei diese Leisten oder Schienen übereinander, und hierbei jeweils die obere und untere Umfangsrandkante des Grundelementes mit darübergeschlagenem Randbereich der Membrane umgreifend, aufbringbar sind. In diesem Falle besteht also die Möglichkeit, zwei oder mehrere Klemmsitz-Profildichtungelemente übereinander aufzubringen, was insbesondere zu einer vorteilhaften Verstärkung der Klemmwirkung führt.

Darüber hinaus gibt es in der Praxis Fälle, in denen die Stärke des plattenartigen Grundelementes verhältnismäßig gering ist, so daß es aus Kostengründen ungünstig sein kann, ein angepaßtes Klemmsitz-Profildichtungselement speziell zu fertigen. Zur Berücksichtigung eines solchen Falles ist gemäß einer Weiterbildung der Erfindung zusätzlich wenigstens ein Korrektur-Profilelement zum jeweils randbereichsseitigen Befestigen mit dem Grundelement vorgesehen, wodurch also der Randbereich des Grundelementes auf die erforderliche Stärke gebracht wird, wobei dann das jeweilige Klemmsitz-Profildichtungselement, beispielsweise in der Form eines Standard-Dichtungselementes, in der Weise ausgebildet ist, daß es jeweils zum wenigstens teilweise Umgreifen des Korrektur-Profilelementes mit dem über dieses gefalteten Randbereich der Membrane dient.

Aufgrund dieser Ausgestaltung der Erfindung besteht somit die Möglichkeit, mit gleichen, standardisierten Klemmsitz-Profildichtungselementen Grundelemente unterschiedlicher Materialstärke zu verwenden und zu montieren.

Weitere bevorzugte Ausführungen von als Bauteilsätze ausgebildeten Verbindungsvorrichtungen für den Verteiler ergeben sich aus den Ansprüchen 8 und 9.

Aufgrund der weiteren Ausgestaltungen nach Anspruch 10 ergibt sich der besondere Vorteil, daß die KlemmsitzProfildichtungsleiste oder Profildichtungsschiene ein U-Profil mit zwei ungleich dimensionierten, ersten und zweiten Schenkeln bildet, so daß bei dem fertig montierten Verteiler der eine, kürzere Schenkel im Randbereich der Membrane unmittelbar auf deren Oberfläche aufliegt, wobei durch die kürzere Ausbildung dieses Schenkels gewährleistet ist, daß der die Membrane anhebende Gas- oder Luftdruck nicht dazu führt, daß dieser Schenkel des U-Profils gleichsam abgedrückt oder abgehebelt wird. Während somit der obere, kürzere Schenkel eine geringere Angriffsfläche darbietet, gewährleistet andererseits der gegenüberliegende, untere, zweite Schenkel des U-Profils, daß die Wirksamkeit der festklemmenden und gleichzeitig abdichtenden Verbindung voll aufrechterhalten wird, wie dies bereits weiter oben erläutert ist.

Aufgrund der speziellen, konstruktiven Weiterbildungen der Erfindung gemäß Ansprüchen 11 - 15 ist insbesondere gewährleistet, daß in den Eckenbereichen des Verteilers die in den stirnseitigen Endabschnitten der Klemmsitzprofildichtungsleisten oder -Profildichtungsschienen vorgesehenen, vorsprungartigen Verlängerungsteile ein gegenseitiges Ineingriffkommen der dort i. w. rechtwinklig aufeinander zu stoßenden Leisten oder Schienen ermöglichen, wodurch jeweils eine luftdichte Verklemmung auch in diesen Eckenbereichen des Verteilers gewährleistet ist.

Aus den Ansprüchen 16 - 20 ergeben sich jeweils in konstruktiver Hinsicht außerordentlich günstige Ausgestaltungen und Ausführungen der niederhaltenden Elemente, welche unmittelbar auf der Oberfläche der Membrane angeordnet sind und die ein Aufwölben dieser Membrane bei Gas-, insbesondere Luft- und/oder O₂-Zufuhr verhindern. In diesem Zusammenhang ist es beispielsweise gemäß Anspruch 17 sehr vorteilhaft, daß diese niederhaltenden Elemente eine Doppelfunktion ausüben, d. h. sowohl eine niederhaltende als auch eine versteifende Funktion in Bezug auf die aus Grundelement und Membrane bestehende Anordnung.

Darüber hinaus ist es vorteilhaft, wenn gemäß den Ansprüchen 21 - 24 separate Versteifungselemente in Form von selbstragenden Profilen für den Verteiler vorgesehen sind.

Gemäß den Ansprüchen 25 und 26 kann je nach der zu erwartenden Zugbeanspruchung das plattenartige Grundelement und/oder das jeweilige Klemmsitz-Profildichtungselement (bzw. -Leiste oder -Schiene) und/oder das Korrektur-Profilelement zumindest an den jeweils als Dichtflächen vorgesehenen Oberflächen zusätzlich mit Riffelungen und/oder mit Haftvermittlern versehen sein, wodurch eine Erhöhung der Haftreibung und/oder des Liniendruckes und/oder eine Verbesserung der Kohäsionskräfte erreicht werden kann.

Aufgrund einer abgewandelten Ausführungsform der Erfindung gemäß den Ansprüchen 27 - 29 ist gewährleistet, daß die niederhaltenden Elemente, die über der Membrane anzuordnen sind, und/oder die gesonderten Versteifungselemente, die unterhalb des Grundelements zu liegen kommen, quasi gleichzeitig mit den Klemmsitz-Profildichtungselementen verklemmt werden können, so daß auf eine Befestigung durch Verschrauben oder Vernieten der niederhaltenden Elemente und/oder der Versteifungselemente mit dem Grundelement verzichtet werden kann.

Auch in diesem Falle ergibt sich eine sehr einfache Konstruktionsweise, so daß der resultierende Verteiler sehr schnell und variabel aufgebaut und den jeweiligen Bedürfnissen in den Klärbecken sehr schnell angepaßt werden kann. Bei dieser Ausführungsvariante werden insbesondere lediglich eine gegebene Anzahl von Klemmsitz-Profildichtungsleisten und eine gegebene Anzahl von niederhaltenden Elementen und/oder zusätzlichen Versteifungselementen benötigt, insbesondere in der Form eines Bauteilsatzes, mit dessen Hilfe sodann sich die resultierenden Verteiler unter Verwendung der anderen hierzu noch benötigten Komponenten in der jeweils gewünschten Größe zusammensetzen lassen.

Im übrigen lassen sich in bevorzugter Weise für die nach der Erfindung ausgebildete Verbindungsvorrichtung, insbesondere für die Klemmsitz-Profildichtungsleisten oder -Profildichtungsschienen glasfaserverstärkte Kunststoffe verwenden.

Zur näheren Erläuterung der Erfindung sowie ihrer weiteren Merkmale und Vorteile dient die beigefügte Zeichnung, in welcher Ausführungsbeispiele der Erfindung dargestellt sind.

Hierbei zeigt:
- Fig. 1: schematisch einen Gas- oder Luftverteiler in einer perspektivischen Ansicht, wie er an sich bereits bekannt ist;
- Fig. 2: eine schematische Schnittansicht eines Randbereiches eines plattenartigen Grundelements mit darüber angeordneter, gummielastischer Membrane sowie mit einer in diesem Randbereich angebrachten Verbindungsvorrichtung;
- Fig. 3: eine perspektivische Teil-Ansicht der Verbindungsvorrichtung gemäß Fig. 2;
- Fig. 4: schematisch eine randseitige Seitenansicht eines Grundelementes 1 mit auf diesem angeordneter gummielastischer Membrane;
- Fig. 5: ein Ausführungsbeispiel einer Verbindungsvorrichtung, wie sie für die Anordnung gemäß Fig. 4 gedacht ist;
- Fig. 6: eine weitere schematische, randseitige Seitenansicht einer aus Grundelement, zugeordneter gummielastischer Membrane sowie Verbindungsvorrichtung bestehenden Anordnung;
- Fig 7: ein Ausführungsbeispiel einer als Bauteilsatz ausgebildeten Verbindungsvorrichtung in einer schematischen Seitenansicht und in auseinandergezogenem Zustand;
- Fig 8: eine Detail-Ansicht des Grundelementes gemäß Fig. 7;
- Fig 9: eine Detail-Ansicht eines Klemmsitz-Profildichtungslementes gemäß Fig. 7;
- Fig 10: ein weiteres Ausführungsbeispiel einer aus einer Verbindungsvorrichtung und einem Korrektur-Profilelement bestehenden Anordnung in schematischer Seitenansicht;
- Fig 11: in perspektivischer Teil-Ansicht ein weiteres Ausführungsbeispiel einer Verbindungsvorrichtung,
- Fig 12: in einer perspektivischen Ansicht ein weiteres Ausführungsbeispiel eines Gas- oder Luftverteilers;
- Fig 13: eine gegenüber der Darstellung in Fig. 12 vergrößerte, schematische, randseitige Seitenansicht der aus Grundelement, zugeordneter gummielastischer Membrane und Verbindungsvorrichtung bestehenden Anordnung;
- Fig 14: eine gesonderte, perspektivische Teil-Ansicht der Verbindungsvorrichtung gemäß Figur 13;
- Fig 15: eine perspektivische Ansicht eines Endabschnittes einer Klemmsitz-Profildichtungsleiste gemäß einer abgewandelten Ausführungsform;
- Fig 16: eine Ansicht in Richtung des Pfeiles Pf₁ gemäß Fig. 15;
- Fig 17: eine Ansicht in Richtung des Pfeiles Pf₂ gemäß Fig. 16;
- Fig 18: eine schematische, stirnseitige Teil-Ansicht eines Gas- oder Luftverteilers gemäß Fig. 12 in einer dieser gegenüber abgewandelten Ausführungsform;
- Fig 19: eine schematische Seitenansicht eines Endabschnittes eines über der Membrane gemäß Fig. 18 angeordneten, niederhaltenden Elementes;
- Fig 20: eine der Fig. 18 entsprechende Darstellung zur Erläuterung einer weiteren, abgewandelten Ausführungsform; und
- Fig 21: eine schematische, randseitige Seitenansicht einer abgewandelten Ausführungsform einer Verbindungsvorrichtung für einen Gas- oder Luftverteiler.

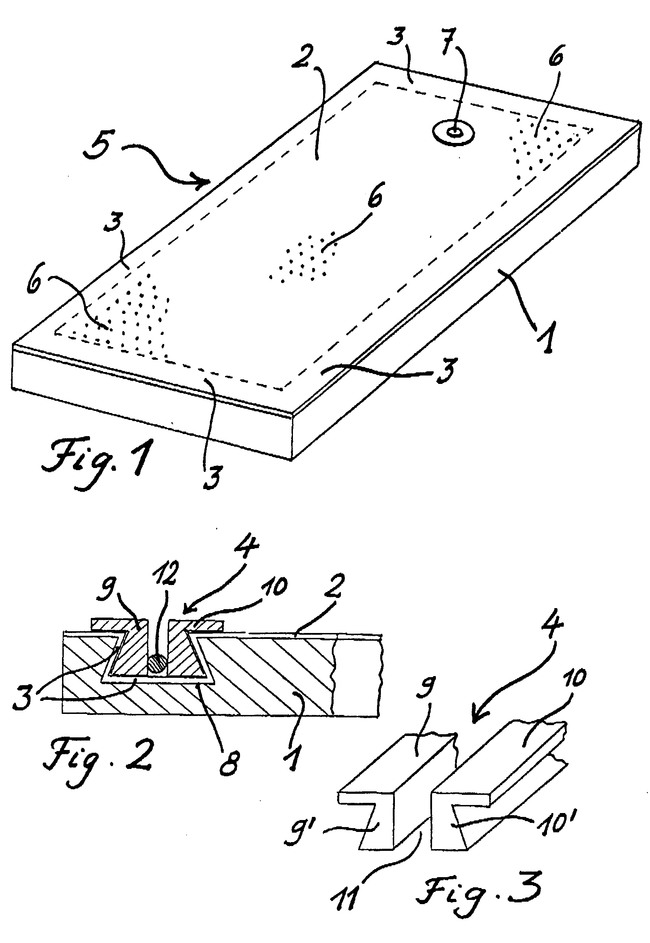

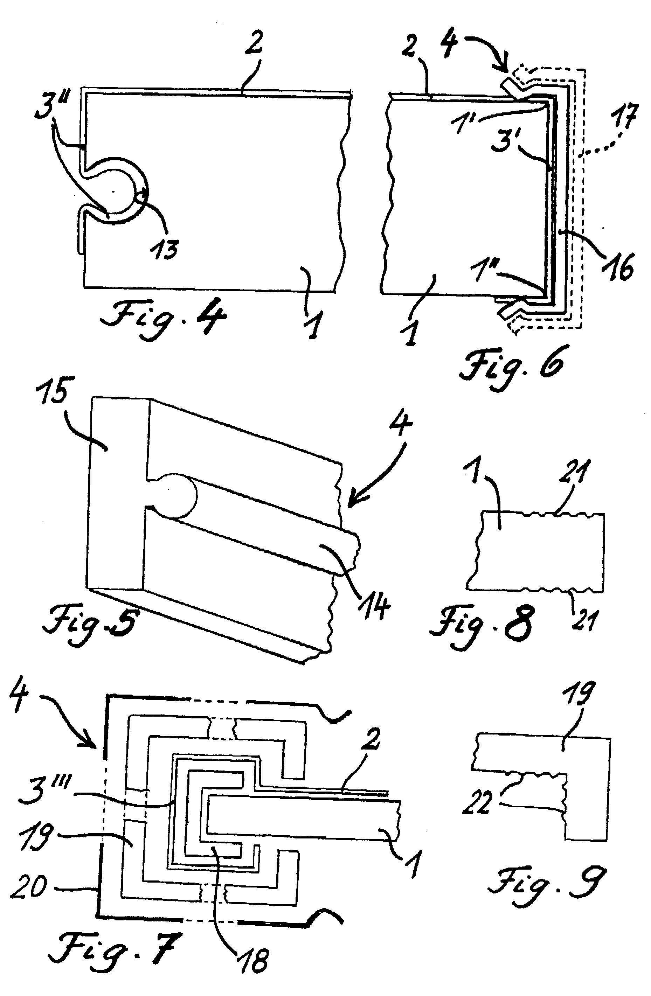

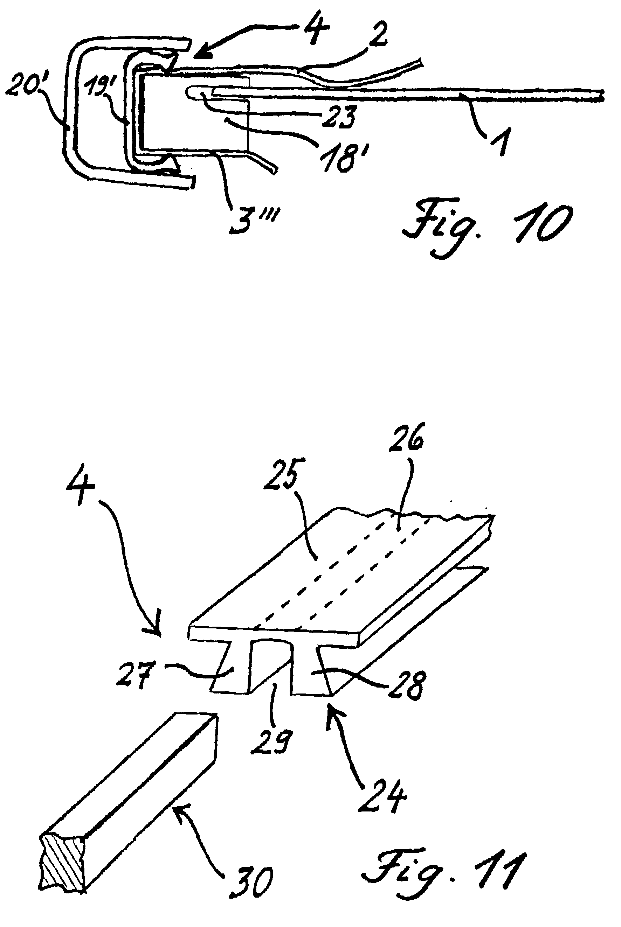

Ein in Fig. 1 schematisch dargestellter Gas- oder Luftverteiler 5 besteht aus einem festen, plattenartigen Grundelement 1, beispielsweise aus Kunststoff, Eternit o. dgl. Materialien, wobei auf diesem Grundelement 1 eine Membrane 2 (= gummielastische, gelochte Gas- oder Luftverteiler-Folie 2) angeordnet ist.

Die Perforationen in dieser Membrane sind in Fig. 1 beispielsweise mit der Bezugsziffer 6 angedeutet. Zu dem Luftverteiler 5 gehört ferner ein Gas- oder Luftzufuhranschluß 7, durch welchen ein Gas, wie z. B. Luft oder Sauerstoff der Membrane 2 zugeführt wird.

Wie in Fig. 1 ferner angedeutet ist, weist die Membrane 2, bei welcher es sich im übrigen auch um eine dünne, gummielastische perforierte Platte handeln kann, ringsum Randbereiche 3 auf, welche dicht mit entsprechenden Randbereichen des darunter angeordneten Grundelementes 1 verbunden werden müssen.

Bei dem in Fig. 1 schematisch dargestellten Gas- oder Luftverteiler 5, dessen Funktionsweise an sich bekannt ist, weisen die aus dem Gas- bzw. Luftverteiler austretenden Luftblasen über die gesamte Verteilerfläche einen gleichmäßigen Durchmesser sowie eine gleichmäßige Verteilung auf.

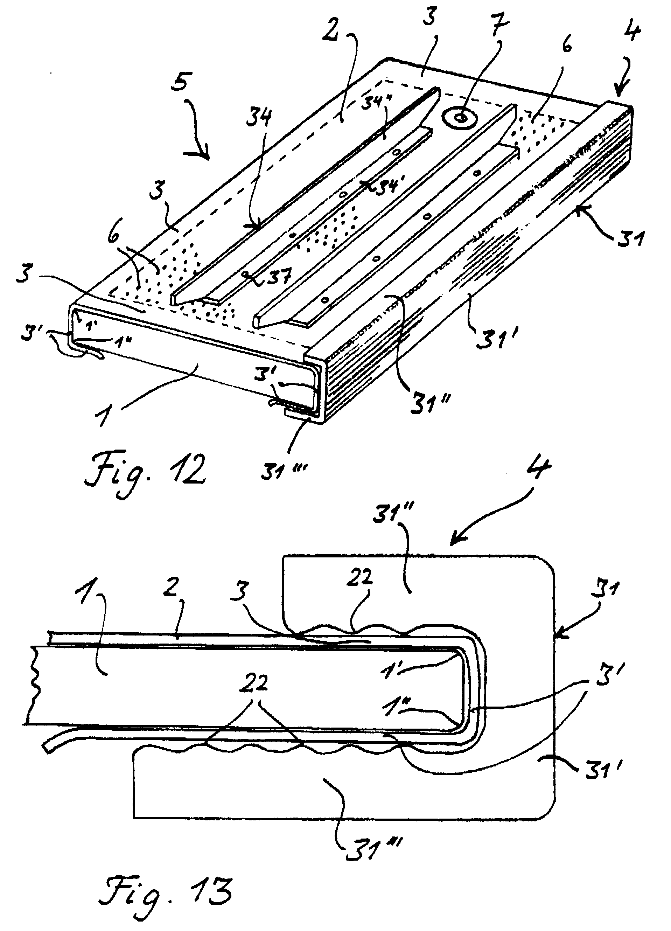

Aus den Fig. 2 und 3 geht ein erstes Ausführungsbeispiel für eine Verbindungsvorrichtung hervor, mit deren Hilfe für eine sowohl festklemmende als auch gut abdichtende Verbindung zwischen Randbereichen 3 der Membrane 2 und den zugeordneten, unterhalb der Membrane 2 befindlichen Randbereichen des festen, plattenartigen Grundelementes 1 gesorgt wird.

Die Membrane 2 liegt auf der oberen Oberfläche des Grundelementes 1 bei fehlender oder geringerer Gas- bzw. Luftzufuhr satt auf, ein Zustand, wie er in den Fig. 1 und 2 angedeutet ist. Die in den Fig. 2 und 3 dargestellte Verbindungsvorrichtung 4 ist als ein Bauteilsatz pro Randbereich ausgebildet, wobei dieser Bauteilsatz aus zwei separaten Klemmsitz-Profildichtungselementen 9 und 10 und einem Rundstab 12 besteht, welcher in einem Zwischenraum 11 (vgl. Fig. 3) zwischen den beiden Klemmsitz-Profildichtungselementen 9 und 10 eingefügt werden kann.

Ein jedes dieser beiden vorgenannten Elemente 9 und 10 weist nun einen umgekehrt L-förmigen Profilquerschnitt auf, wobei jeweils ein im wesentlichen keilförmig ausgebildeter Schenkel 9′ und 10′ vorgesehen ist. Das plattenartige Grundelement 1 ist in demjenigen Randbereich, in welchem die Verbindung herzustellen ist, mit einer im wesentlichen im Querschnitt trapezförmigen Nut 8 versehen, in die, bevor die Verbindung gebildet wird, der Randbereich 3 eingefügt und eingepaßt wird. Anschließend werden die beiden Elemente 9 und 10 in die Nut 8 eingeführt, derart, daß die beiden keilförmigen Schenkel 9′ und 10′ in symmetrischer Anordnung von dieser Nut 8 aufgenommen werden, wobei die oberen Abschnitte der beiden Elemente 9 und 10 jeweils beiderseits der Nut 8 auf die obere Oberfläche der Membrane 2 zu liegen kommen, wie dies im einzelnen aus der Fig. 2 zu ersehen ist. Hieraus ist aber auch ferner ersichtlich, daß der Rundstab 12 bereits in den Zwischenraum 11 zwischen den beiden Schenkeln 9′ und 10′ der beiden Klemmsitz-Profildichtungselemente 9 und 10 eingesetzt ist, so daß diese Elemente mit ihren Schenkeln 9′ und 10′ auseinanderbewegt werden, bis sie die seitlichen Ausnehmungen der Nut 8 mit dem darin eingefügten Membranen-Randbereich eng tangieren, wodurch letztendlich die festklemmende und gleichzeitig abdichtende Verbindung bewirkt ist.

Die in Fig. 2 und 3 dargestellte Verbindungsvorrichtung läßt sich im übrigen für alle in der Fig. 1 angedeuteten Randbereiche 3 anwenden.

Bei dem aus den Fig. 4 und 5 ersichtlichen Ausführungsbeispiel handelt es sich um eine Verbindung, bei welcher die Verbindungsvorrichtung 4 (vgl. Fig. 5) aus einem Klemmsitz-Profildichtungselement besteht, das in der Form einer Rundstange 14 ausgebildet ist, die ihrerseits einstückig mit einer Leiste 15 verbunden ist. Zur Bildung der Verbindung läßt sich diese Rundstange 14 mit ciner entsprechenden, an einer Seitenfläche des Grundelementes 1 ausgesparten Klemmnut 13 in Eingriff bringen, nachdem zuvor ein zugeordneter Randbereich 3'' der Membrane 2 in diese Klemmnut 13 eingefügt ist. Fig. 4 zeigt diesen Zustand von Grundelement 1 und Membrane 2 vor Herstellung der Verbindung.

Aus Fig. 6 geht ein Ausführungsbeispiel einer Verbindungsvorrichtung 4 hervor, welche durch eine i. w. U-förmig ausgestaltete Klemmsitz-Profildichtungsleiste oder -Profildichtungsschiene 16 gebildet ist. Hierbei wird die randbereichsseitig zu fixierende, aufblasbare, gummielastische Membrane 2 in der Weise über die oberen und unteren Umfangsrandkanten 1′ und 1'' des plattenartigen Grundelementes 1 gelegt, daß sowohl die obere Oberfläche als auch eine Seitenfläche sowie ein vorgegebener Abschnitt der unteren Oberfläche des Grundelementes 1 überdeckt werden, wodurch ein entsprechender Randbereich 3′ der Membrane 2 definiert ist. Über diesen Randbereich 3′ ist nun zur Bildung der klemmenden und dichtenden Verbindung die Klemmsitz-Profildichtungsleiste 16 geschoben, derart, daß diese die obere und untere Umfangsrandkante 1′ und 1'' des Grundelementes 1 gut umgreift.

Wie die Fig. 6 ferner zeigt, besteht auch noch die Möglichkeit, daß zur Verstärkung der Klemm- und Dichtwirkung eine weitere Klemmsitz-Profildichtungsleiste 17 (in Fig. 6 gestrichelt eingezeichnet) über die erste Klemmsitz-Profildichtungsleiste 16 geschoben wird. Somit kann beispielsweise auch die Verbindungsvorrichtung 4 wiederum als ein Bauteilsatz ausgebildet sein, welcher aus zwei oder mehr Klemmsitz-Profildichtungsleisten oder - schienen 16, 17 besteht, wie in der Fig. 6 dargestellt, wobei diese Profildichtungsleisten oder -schienen jeweils übereinander und hierbei die obere und untere Umfangsrandkante 1′ und 1'' des Grundelementes 1 mit darübergeschlagenem Randbereich 3′ der Membrane 2 umgreifend aufbringbar sind.

Aus den Fig. 7 und 10 gehen Ausführungsbeispiele von Verbindungsvorrichtungen hervor, welche derjenigen gemäß Fig. 6 ähnlich ausgestaltet sind.

Wie die Fig. 7 zeigt, besteht die Verbindungsvorrichtung 4 aus einem Bauteilsatz, der zwei Klemmsitz-Profildichtungselemente 19 und 20 aufweist, die übereinander angeordnet einen randseitigen Abschnitt des Grundelementes 1 umgreifen. Dieses besitzt im vorliegenden Ausführungsbeispiel eine relativ geringe Stärke, so daß zusätzlich ein Korrektur-Profilelement 18 vorgesehen ist, das randbereichsseitig mit dem Grundelement 1 befestigt ist.

Über dieses Korrektur-Profilelement 18 ist sodann ein Randbereich 3''' der Membrane 2 gelegt oder gefaltet, derart, daß sich dieser Randbereich 3''' praktisch von der Oberseite bis zur Unterseite des Grundelementes 1 erstreckt. Auf diese Anordnung ist sodann zur Bildung der dichtenden und klemmenden Verbindung zunächst das Klemmsitz-Profildichtungselement 19 aufgebracht und darüber schließlich noch das weitere Klemmsitz-Profildichtungselement 20.

Aus Gründen der Übersichtlichkeit ist die aus Fig. 7 ersichtliche Anordnung in einem auseinandergezogenen Zustand dargestellt.

Der endgültig montierte Zustand eines Luftverteilers mit einer der Fig. 7 entsprechenden Verbindungsvorrichtung 4 läßt sich der Fig. 10 entnehmen. Hier ist wiederum ein Korrektur-Profilelement 18′ dargestellt, welches einen Aufnahmeschlitz 23 aufweist, in den ein Randabschnitt eines verhältnismäßig dünnen Grundelementes 1 eingesetzt ist. Sodann ist wiederum ein Randabschnitt 3''' einer gummielastischen Membrane 2 über Grundelement 1 und Korrektur-Profilelement 18′ gewunden, so daß randbereichsseitig letztendlich wiederum ein erstes Klemmsitz-Profildichtungselement 19′ und darüber noch ein zweites Klemmsitz-Profildichtungselement 20′ aufgebracht werden können.

In der Fig. 11 schließlich ist eine Ausführung einer Verbindungsvorrichtung 4 dargestellt, welche derjenigen gemäß den Fig. 2 und 3 ähnlich ist. Im Falle der Fig. 11 ist die Verbindungsvorrichtung 4 wiederum als ein Bauteilsatz ausgebildet, der aus einem i. w. schwalbenschwanzförmig ausgestalteten Klemmsitz-Profildichtungselement 24 pro Randbereich sowie einem zugehörigen Klemmstab 30 besteht. Das Klemmsitz-Profildichtungselement 24 weist eine Klemmplatte 25 auf, welche mit einem elastischen Mittelsteg 26 versehen ist, wobei sich von den an diesen Mittelsteg 26 angrenzenden seitlichen Bereichen der Klemmplatte 25 aus nach unten jeweils i. w. keilförmig ausgebildete Schenkel 27 und 28 erstrecken, zwischen denen ein Kanal oder Tunnel 29 ausgespart ist. Die beiden Schenkel 27 und 28 sind hierbei einstückig mit der oberen Klemmplatte 25 verbunden.

In entsprechender Weise, wie dies in der Fig. 2 dargestellt ist, greifen bei der Bildung der Verbindung die beiden keilförmigen Schenkel 27 und 28 in die i. w. trapezförmige Nut 8 ein, in die zuvor der zugeordnete Randbereich 3 der Membrane 2 eingefügt ist. Anschließend wird der Klemmstab 30 in den hohlen Kanal 29 eingeschoben oder eingedrückt, wodurch aufgrund der Elastizität des Mittelsteges 26 die beiden keilförmigen Schenkel 27 und 28 voneinander weg und in die zugeordneten Aussparungen in der Nut 8 hinein bewegt werden, wodurch wiederum eine festklemmende und gleichzeitig abdichtende Verbindung erzeugt wird, wie dies an sich bereits anhand der Fig. 2 und 3 erläutert ist.

Der elastische Mittelsteg 26 bei dem Klemmsitz-Profildichtungselement 24 erbringt darüber hinaus noch den Vorteil, daß bei einer sich verstärkenden Zugbeanspruchung aufgrund der sich aufwölbenden Membrane 2 der klemmende Effekt im Bereich unterhalb der Schenkel 27 und 28 bis hinauf zur Klemmplatte 25, deren Seitenabschnitte wiederum auf der Oberseite der Membrane 2 dicht aufliegen, noch begünstigt wird. Die Komponenten 24 und 30 des in Fig. 11 dargestellten Bauteilsatzes 4 (Verbindungsvorrichtung) bestehen im übrigen vorzugsweise aus einem Kunststoff.

Aus den Fig. 8 und 9 ist schließlich noch zu ersehen, daß beispielsweise das plattenartige Grundelement 1 an einer oder mehreren, jeweils als Dichtflächen vorgesehenen Oberflächen zusätzlich mit Riffelungen 21 (Fig. 8) oder aber auch ein Klemmsitz-Profildichtungselement, beispielsweise das Element 19 gemäß Fig. 7 an einer oder mehreren jeweils als Dichtflächen vorgesehenen Oberflächen zusätzlich mit Riffelungen 22 (Fig. 9) versehen sein kann.

Mittels derartiger Riffelungen läßt sich die Haftreibung und/oder der Liniendruck noch erhöhen.

Zur weiteren Verbesserung der Haftreibung bzw. der Kohäsionskräfte können aber auch anstelle der oder zusätzlich zu den Riffelungen 21 oder 22 auch noch Haftvermittler angewendet werden.

Bei dem erfindungsgemäß ausgebildeten Gas-, insbesondere Luftverteiler ist in jedem Falle die Bildung einer dauerhaften, schraubenlosen, auch unter hoher mechanischer Beanspruchung absolut gasdichten bzw. luftdichten Verbindung zwischen Randbereichen einer gummielastischen Membrane mit entsprechenden Randbereichen eines festen, plattenartigen Grundelementes sichergestellt. Dieser Effekt liegt vor allen Dingen dann vor, wenn, wie in der Fig. 1 angedeutet, über den Gas-oder Luftzufuhranschluß 7 des Gas- oder Luftverteilers 5 zwischen Grundelement 1 und Membrane 2 ein Gas oder Luft oder O₂ oder Luft u. O₂ eingeblasen wird, wodurch es zu einem Aufwölben der Membrane 2 relativ zum Grundelement 1 kommt. Hierbei verstärkt sich der festklemmende Effekt mit sich erhöhendem Gas- oder Luftdruck und damit zunehmender Zugbeanspruchung im Bereich der hergestellten Verbindung.

Im übrigen läßt sich die Verbindungsvorrichtung nicht nur für Gas-, insbesondere Luftverteiler, wie im Vorangehenden erläutert, verwenden, sondern darüber hinaus auch beispielsweise für Hebewerkzeuge, Schwimmkörper, Verdrängungskörper u. dgl. mehr, d. h. also in Anwendungsfällen, in denen es ebenfalls auf eine vorzugsweise ringsum verlaufende, randseitige, feste Verbindung mit gleichzeitig sehr guter Dichtwirkung ankommt.

Unter Bezugnahme auf Fig. 11 ist noch darauf hinzuweisen, daß eine umgekehrte Einbauweise des Klemmsitz-Profildichtungselementes 24, derart, daß die Schenkel 27, 28 - im Unterschied zur Anordnung gemäß Fig. 11 - nach oben gerichtet sind, bei entsprechend modifizierter Nutausbildung möglich ist.

Ein in der Fig. 12 dargestellter Gas- oder Luftverteiler 5 besteht i. w. aus einem festen, plattenartigen Grundelement 1 aus Kunststoff, Eternit oder dergleichen Materialien. Auf diesem festen Grundelement 1 ist eine Membrane 2 angeordnet, wobei die Perforationen in dieser Membrane 2 wiederum in der Fig. 12 beispielsweise mit der Bezugsziffer 6 angedeutet sind. Zu dem Gas- oder Luftverteiler 5 gehört ferner ein Luftzufuhranschluß 7, durch welchen ein Gas oder Luft oder Luft und O₂ oder O₂ der Membrane 2 zugeführt wird.

Wie aus Fig. 12 weiterhin ersichtlich, weist die gummielastische Membrane 2 ringsum Randbereiche 3 auf , welche dicht mit entsprechenden Bereichen des darunter angeordneten Grundelementes 1 verbunden werden müssen. Zu diesem Zweck ist gemäß Fig. 12 und 13 eine Verbindungsvorrichtung 4 vorgesehen, mit deren Hilfe für eine sowohl festklemmende als auch gut abdichtende Verbindung zwischen den Randbereichen 3 der Membrane 2 und den zugeordneten, unterhalb der Membrane 2 befindlichen Randbereichen des festen, plattenartigen Grundelementes 1 gesorgt wird. Der jeweilige Randbereich 3 der Membrane 2 setzt sich in einem über die oberen und unteren Umfangsrandkanten 1′ und 1'' des Grundelements 1 geschlagenen Randbereich 3′ fort. Dieser Membranen-Randbereich 3′ wird auch noch ein Stück entlang der unteren Oberfläche des Grundelements 1 geführt und endet sodann, kurz nachdem er aus der Verbindungsvorrichtung 4 herausgetreten ist, wie die Figuren 12 und 13 eindeutig zeigen. Das in den Fig. 12 - 14 dargestellte Ausführungsbeispiel der Verbindungsvorrichtung 4 ist durch eine spezielle, i. w. U-förmig ausgebildete Klemmsitz-Profildichtungsleiste oder -Profildichtungsschiene 31 charakterisiert, die zur Bildung der erwünschten klemmenden und dichtenden Verbindung über die Randbereiche der Membrane 2 geschoben ist, derart, daß zwei zueinander parallele Schenkel 31'' und 31''' der Klemmsitz-Profildichtungsleiste 31 die jeweiligen oberen und unteren Umfangsrandkanten 1′ und 1'' des Grundelements 1 gut übergreifen (vgl. 12 und 13). Es handelt sich hierbei um zwei ungleichlang dimensionierte, von einem U-Profil-Basisteil 31′ i. w. jeweils rechtwinklig weggerichtete, erste und zweite Schenkel 31'' und 31'''. Infolgedessen kommt im montierten Zustand der eine, kürzere Schenkel 31'' auf den zugeordneten Randabschnitt der oberen und von der Membrane 2 bedeckten Seite des Grundelements 1 zu liegen, während der andere, gegenüberliegende und länger ausgebildete Schenkel 31''' auf einen gegenüberliegenden Randabschnitt der unteren Seite des Grundelements 1 mit dem darübergeschlagenen Randbereich 3′ der Membrane 2 zu liegen kommt. Bei dem Grundelement 1 kann es sich beispielsweise um eine Kunststoff-Platte mit einer Stärke von 5 mm handeln, wobei die Umfangsrandkanten 1′ und 1'' dieser Platte abgerundet sind, um die Membrane 2 nicht zu verletzen. Durch den oberen, kürzeren Schenkel 31'' der Leiste 31 ist gewährleistet, daß die sich infolge Gas- oder Luftzufuhr nach oben wölbende Membrane 2 diesen Schenkel 31'' nicht wegdrückt oder abhebelt.

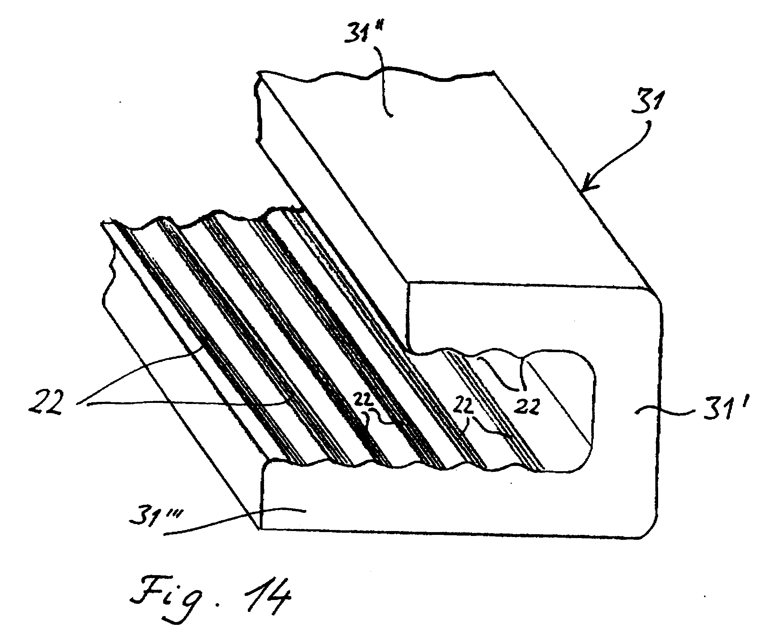

Wie Figuren 13 und 14 ferner zeigen, sind die jeweils als Dichtflächen dienenden Oberflächen der beiden Schenkel 31'' und 31''' der Leiste 31 zusätzlich mit Riffelungen 22 versehen, wodurch die Haftreibung und/oder der Liniendruck erhöht wird.

Obwohl in der Fig. 12 nur an einer Längsseite des Gas-oder Luftverteilers 5 eine Klemmsitz-Profildichtungsleiste 31 auf die aus Grundelement 1 und Membrane 2 bestehende Anordnung aufgeschoben ist, versteht es sich, daß auch auf der gegenüberliegenden Längsseite sowie auf den beiden Breitseiten des Gas- oder Luftverteilers 5 in Wirklichkeit ebenfalls entsprechende Klemmsitz-Profildichtungsleisten 31 aufgebracht sind.

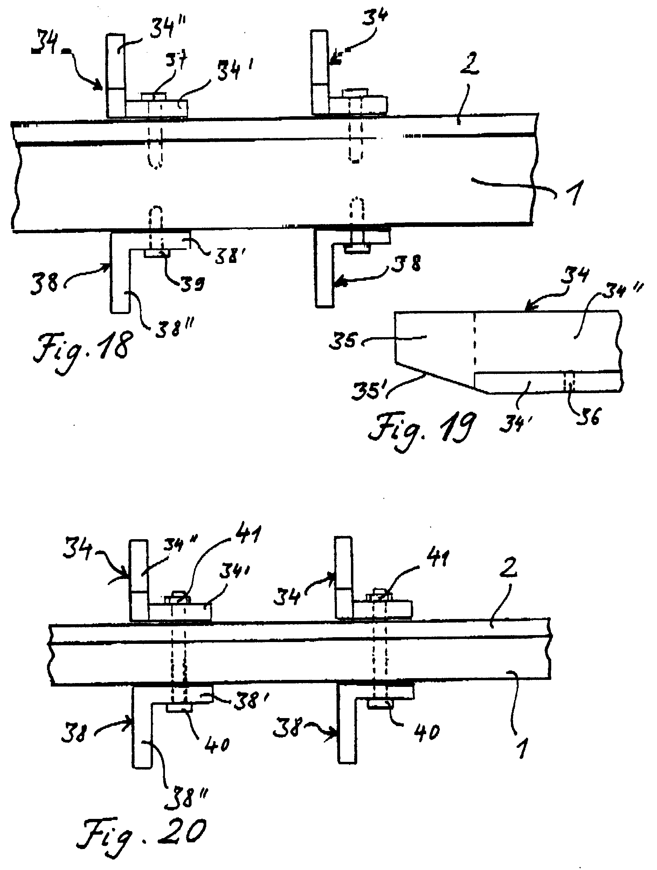

Darüber hinaus zeigen die Fig. 12 und 18 noch, daß, um ein Aufwölben der Membrane bei Zufuhr von Gas oder Luft oder O₂ oder Luft und O₂ zu verhindern, eine Anzahl von niederhaltenden Elementen 34 vorgesehen ist, welche auf der Oberfläche der Membrane 2 in der Längsrichtung des Gas- oder Luftverteilers 5 verlaufen. Diese Niederhalter 34 sind nun in der Form vom ersten Winkelprofilelementen ausgebildet und besitzen hierdurch nicht nur eine niederhaltende Funktion, sondern dienen gleichzeitig auch als Versteifungselemente, um die aus Grundelement 1 und Membrane 2 bestehende Anordnung auszusteifen. Im einzelnen besteht ein derartiges niederhaltendes Element 34 aus einem ersten Stegteil 34′, welches zur Oberfläche der Membrane 2 parallel verläuft, sowie aus einem gegenüber dem ersten Stegteil 34′ rechtwinklig abstehenden zweiten Stegteil 34''. Das erste Stegteil 34′ eines jeden niederhaltenden Elementes 34 ist hierbei mit dem Grundelement 1 mittels einer Schraube 37 befestigt, wobei aber auch eine andere Befestigungsart möglich ist, beispielsweise durch Vernieten.

Diese zweiten von der Oberfläche der Membrane 2 senkrecht nach oben abstehenden Stegteile 34'' weisen nun jeweils endseitige Abschnitte 35 auf (vgl. Fig. 19), welche sich keilförmig verjüngend ausgebildet sind, wobei eine untere schräge Kante 35′ winklig von dem Befestigungs-Stegteil 34′ aus nach oben gerichtet ist und sodann in eine vertikale Kante übergeht. Durch diese Schrägausbildung oder keilförmig sich verjüngende Gestaltung dieser Endabschnitte 35 der Stegteile 34'' ist ein Auswölben der Membrane 2 in den entsprechenden endseitigen Bereichen ermöglicht, um in diesen Bereichen eine quergerichtete Durchströmung des Gas- oder Luftverteilers 5 zu gewährleisten.

Diese keilförmige Ausbildung der Endabschnitte der Stegteile 34'' der niederhaltenden Elemente 34 ist im einzelnen aus Fig. 19 zu ersehen. Diese zeigt auch, daß das zur Membrane 2 parallel gerichtete Stegteil 34′ mit Gewindebohrungen 36 versehen ist, die zur Einführung von Schrauben 37 dienen, die, wie Figur 18 zeigt, durch die Membrane 2 hindurch in das plattenförmige Grundelement 1 hineingeschraubt werden können.

Die Figuren 18 und 19 zeigen ferner, daß auf der den niederhaltenden Elementen 34 gegenüberliegenden, unteren Oberfläche des Grundelements 1 noch weitere selbsttragende Profile in der Form von separaten Versteifungselementen 38 vorgesehen sein können, welche vorzugsweise ebenfalls die Gestalt von (zweiten) Winkelprofilelementen besitzen. Auch diese Winkelprofilelemente bzw. Versteifungselemente 38 weisen eine zur unteren Oberfläche des Grundelements 1 parallele Stegteile 38′ auf, die jeweils mittels Schrauben 39 mit dem Grundelement 1 verschraubt werden können, wobei natürlich auch eine andere Befestigungsart, wie z. B Vernieten, denkbar ist.

Wie ersichtlich, liegen sich die niederhaltenden Elemente 34 und die separaten Versteifungselemente 38 jeweils auf den Ober- und Unterseiten des Luftverteilers direkt gegenüber, wobei die jeweils vertikal ausgerichteten Stegteile 34'' bzw. 38'' einander entgegengesetzt, d. h. einmal nach oben und zum anderen nach unten ausgerichtet sind. Falls die Grundplatte 1 entsprechend dünn gehalten ist, besteht auch die Möglichkeit, wie Fig. 20 zeigt, daß die beiden zu den Oberflächen der Grundplatte 1 parallelen Stegteile 34′ und 38′ der jeweiligen Winkelprofilelemente 34 und 38 durch das Grundelement 1 und die Membrane 2 hindurch miteinander verschraubt werden, wobei hierzu Schrauben 40 und Muttern 41 vorgesehen sind. Statt einer derartigen Verschraubung ist auch eine andere Befestigungsart, wie z. B. Vernieten, denkbar.

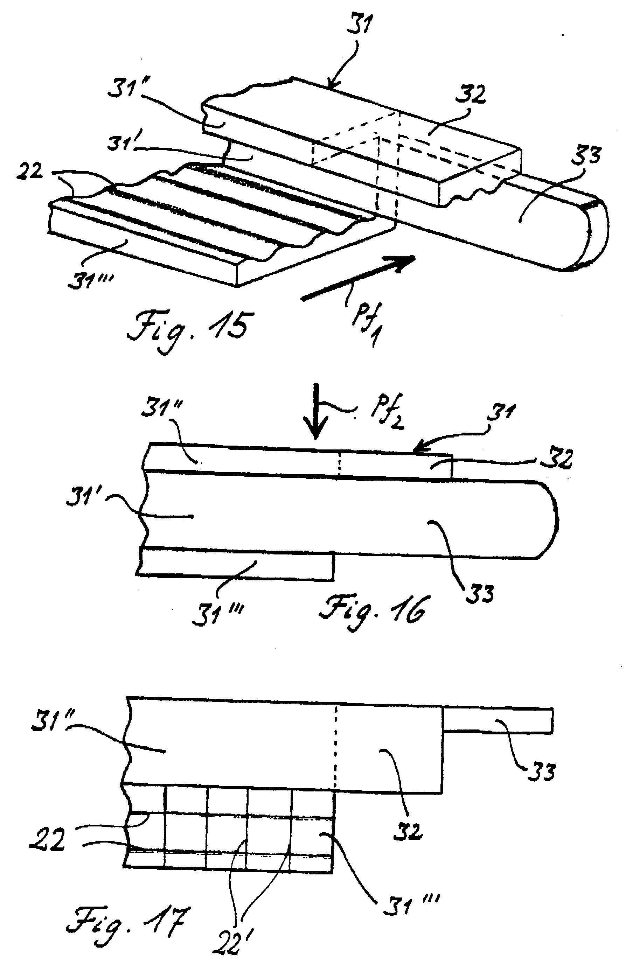

Fig. 15 - 17 zeigen eine Ausbildung von stirnseitigen Endabschnitten einer Klemmsitz-Profildichtungsleiste 31, welche den Zweck hat, daß diese stirnseitigen Endabschnitte in Eckenbereichen des Gas- oder Luftverteilers 5 miteinander in Eingriff gelangen können. Aus diesem Grunde weist ein stirnseitiger Endabschnitt, wie schematisch Fig. 15 zeigt, zwei vorsprungartige Verlängerungsteile auf, und zwar zum einen ein dachartig vorspringendes Verlängerungsteil 32, welches von dem ersten, kürzeren Schenkel 31'' des U-Profils ausgeht, sowie zum anderen ein zweites Verlängerungsteil 33, welches sich von dem U-Profil-Basisteil 31′ ausgehend fingerartig in der Längsrichtung des U-Profils erstreckt, wobei dieses zweite Verlängerungsteil 33 länger ausgebildet ist, als das erste Verlängerungsteil 32, wie auch die Figuren 16 und 17 zeigen. Beim gegenseitigen Zusammenfügen in Eckenbereichen des Gas- oder Luftverteilers 5 gelangen somit diese fingerartig vorspringenden Verlängerungsteile 33 jeweils in die durch das U-Profil gebildete Nut hinein und stoßen dann auf das U-Profil-Basisteil 31'', während andererseits das dachartig vorspringende, erste Verlängerungsteil 32 mit seiner Stirnfläche an dem oberen, kürzeren Schenkel 31'' zum Anschlag gelangt.

Hierdurch ist auch diesen Eckenbereichen eine klemmende und abdichtende Verbindung gewährleistet.

Die Klemmsitz-Profildichtungsleisten oder -Profildichtungsschienen sind vorzugsweise aus glasfaserverstärkten Kunststoffen hergestellt, wobei wie bereits erwähnt, die zur Abdichtung dienenden Oberflächen mit einer Verrippung oder Riffelung 22 versehen sind. Wie die Fig. 17 noch zeigt, können diese Riffelungen 22 nicht nur in der Längsrichtung verlaufen, sondern es ist auch möglich, dazu quergerichtete Riffelungen 22′ auszubilden, insbesondere bei der Verwendung von glasfaserverstärkten Kunststoffen.

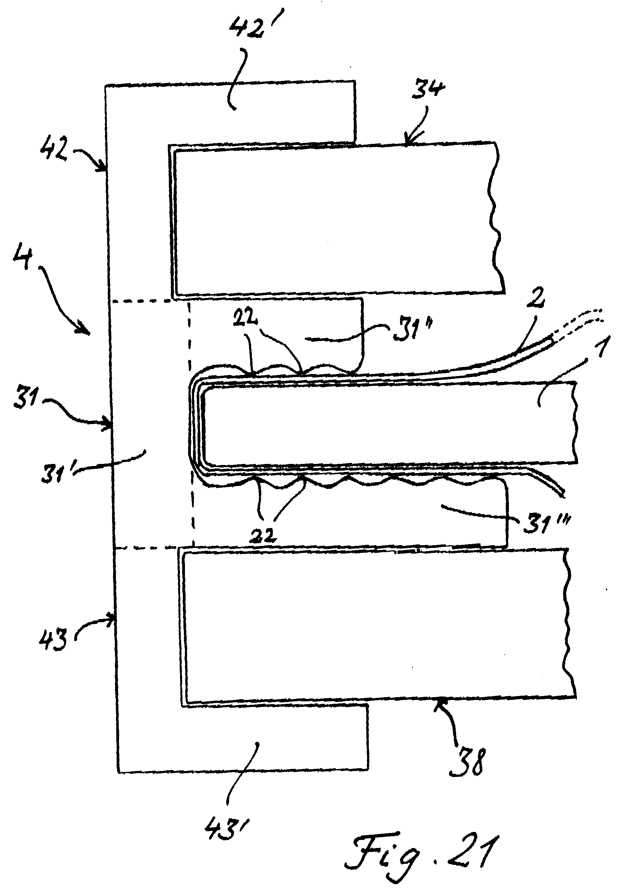

Schließlich zeigt die Fig. 21 noch eine abgewandelte Ausführungsform einer Verbindungsvorrichtung 4, die insgesamt aus einem dreifachen U-Profil besteht, d. h. es sind hier praktisch drei U-Profile in der vertikalen Richtung unmittelbar übereinander angeordnet. Das mittlere U-Profil entspricht hierbei der Klemmsitz-Profildichtungsleiste 31 gemäß Figuren 13 oder 14, wobei oberhalb und unterhalb dieser Klemmsitz-Profildichtungsleiste 31 jeweils noch zusätzliche Winkelprofilelemente 42 und 43 angeordnet sind. Vorzugsweise sind hierbei diese Winkelprofilelemente 42 und 43 mit dem U-Profil-Basisteil 31′ einstückig verbunden, wobei dieses System vorzugsweise insgesamt aus einem glasfaserverstärkten Kunststoff besteht. Bei dieser Konstruktionsweise wird zwischen dem einen Schenkel 31'' des Klemmsitz-Profildichtungselementes 31 und dem darüberliegenden Schenkel 42′ eine erste Einstecknut gebildet, die zur Aufnahme eines Endabschnittes eines niederhaltenden Elementes 34 dient.

Auf der gegenüberliegenden Seite wird zwischen dem zweiten Schenkel 31''' des Klemmsitz-Profildichtungselementes 31 und dem darunter parallel dazu verlaufenden, weiteren Schenkel 43′ eine zweite Einstecknut ausgebildet, welche zur Aufnahme eines Endabschnittes eines Versteifungselements 38 dient.

Anstatt eines derartigen dreifachen U-Profiles könnte natürlich auch nur ein doppeltes U-Profil vorgesehen sein, etwa bestehend aus dem Klemmsitz-Profildichtungselement 31 und entweder dem oberen Winkelprofilelement 42 oder dem unteren Winkelprofilelement 43.

Ganz abgesehen hiervon, besteht auch noch die Möglichkeit, daß lediglich Klemmsitz-Profildichtungselemente in Form von Leisten oder Schienen 31 vorgesehen sind, wobei in die durch die jeweiligen beiden Schenkel 31'' und 31''' gebildeten Aufnahmenuten auch niederhaltende Elemente in ihren stirnseitigen Endabschnitten mit eingefügt werden können.

## Patentansprüche

1. Gasverteiler, insbesondere Luftverteiler zum feinblasigen Belüften von Wasser, mit
- einem festen, plattenartigen Grundelement (1);
- einer über dem Grundelement (1) angeordneten Membrane (2) (= gummielastische, gelochte Gas- oder Luftverteiler-Folie oder -Platte);
- einer Verbindungsvorrichtung (4) zum lösbaren, gasdichten Verbinden von Randbereichen der Membrane (2) mit entsprechenden Randbereichen des Grundelements (1), derart, daß die Membrane (2) bei fehlender oder geringer Gas-, insbesondere Luft- und/oder O₂-Zufuhr auf wenigstens einer Oberfläche des Grundelements (1) satt aufliegt;
- über der Membrane (2), insbesondere auf deren Oberfläche, angeordneten, niederhaltenden im wesentlichen stegförmigen Elementen, die ein Aufwölben der Membrane (2) bei Gas-, insbesondere Luft- und/oder O₂-Zufuhr verhindern;
- wobei die Verbindungsvorrichtung (4) wenigstens einen mindestens U-förmigen Umschlingungsbereich der Membrane (2) umfaßt, in welchem die Membrane (2) entweder einen Randbereich des plattenartigen Grundelements (1) umgreift oder etwa U-förmig in einer nutartigen Ausnehmung (3; 13) des plattenartignen Grundelements (1) einliegt sowie ein Klemmsitz-Profildichtungselement (9, 10; 14, 15; 19, 20; 19', 20') vorgesehen ist, welches spätestens im Betriebszustand mindestens zwei linienförmige Klemmungen der Membrane (2) in sich im wesentlichen gegenüberliegenden Klemmungsbereichen des Umschlingungsbereichs bewirkt.

2. Verteiler nach Anspruch 1,
dadurch gekennzeichnet,
daß das (die) Klemmsitz-Profildichtungselement(e) als im wesentlichen U-förmige Klemmsitz-Profildichtungsleiste(n) oder -Profilschiene(n) (16) zum Umgreifen einer jeweils oberen und unteren Umfangsrandkante (1',1'') des Grundelementes (1) mit darüber geschlagenem Randbereich (3') der Membrane (2) ausgebildet ist (sind).

3. Verteiler nach Anspruch 1,
dadurch gekennzeichnet,
daß das (die) Klemmsitz-Profildichtungselement(e) in der Weise ausgebildet ist (sind), daß es (sie) mit einer entsprechenden, im jeweiligen Randbereich des Grundelementes (1) ausgesparten Nut (8, 13), in welche der zugeordnete Randbereich (3', 3'') der Membrane (2) ganz oder teilweise vorher eingefügt ist, in Eingriff bringbar ist (sind).

4. Verteiler nach Anspruch 3,
dadurch gekennzeichnet,
daß das Klemmsitz-Profildichtungselement in der Form einer Rundstange (14) ausgebildet und in eine entsprechende, innerhalb eines zugeordneten Randbereichs des Grundelementes (1) ausgesparte Klemmnut (13) mit dem darin eingefügten Randbereich (3'') der Membrane (2) einsetzbar ist.

5. Verteiler nach Anspruch 4,
dadurch gekennzeichnet,
daß die Rundstange (14) längs einer Leiste (15) angebracht ist, die jeweils entsprechend oder ähnlich der Längs- bzw. Breitseitenfläche des Grundelementes (1) dimensioniert ist.

6. Verteiler nach Anspruch 2,
dadurch gekennzeichnet,
daß die Verbindungsvorrichtung (4) als Bauteilsatz, bestehend aus mindestens zwei KlemmsitzProfildichtungsleisten oder -schienen (16, 17) pro Randbereich, ausgebildet ist, wobei diese Klemmsitz-Profildichtungsleisten oder -schienen übereinander, die obere und untere Umfangsrandkante des Grundelementes (1) mit darüber geschlagenem Randbereich (3′) der Membrane (2) umgreifend, aufbringbar sind.

7. Verteiler nach Anspruch 2 oder 6,
dadurch gekennzeichnet,
daß zusätzlich wenigstens ein Korrektur-Profilelement (18, 18′) zum jeweils randbereichsseitigen Besfestigen mit dem Grundelement (1) vorgesehen ist und daß das (die) Klemmsitz-Profildichtungselement(e) (19, 20, 19′, 20′) jeweils zum wenigstens teilweisen Umgreifen des Korrektur-Profilelements (18, 18′) mit dem über das Korrektur-Profilelement gefalteten Randbereich (3''') der Membrane (2) ausgebildet ist (sind).

8. Verteiler nach Anspruch 3,
dadurch gekennzeichnet,
daß die Verbindungsvorrichtung (4) als Bauteilsatz ausgebildet ist, bestehend aus wenigstens zwei Klemmsitz-Profildichtungselementen (9, 10) pro Randbereich, wobei diese Klemmsitz-Profildichtungselemente jeweils einen umgekehrt L-förmigen Profilquerschnitt mit einem im wesentlichen keilförmigen Schenkel (9′, 10′) aufweisen, zum Eingreifen in symmetrischer Anordnung in eine entsprechend ausgesparte, zur Aufnahme der beiden keilförmigen Schenkel dienende, im wesentlichen trapezförmige Nut (8) jeweils an einem Rande des Grundelementes (1), in welche zuvor ein zugeordneter Randbereich (3) der Membrane (2) eingefügt ist, ferner bestehend aus jeweils einem Rundstab (12), der in einem Zwischenraum (11) zwischen den beiden Schenkeln (9′, 10′) einsetzbar ist, zum Auseinandertreiben der in die randseitige Nut (8) des Grundelementes (1) jeweils eingesetzen keilförmigen Schenkel (9′, 10′) der beiden Klemmsitz-Profildichtungselemente und damit zur Bildung der klemmenden und dichtenden Verbindung.

9. Verteiler nach Anspruch 3,
dadurch gekennzeichnet,
daß die Verbindungsvorrichtung (4) als Bauteilsatz ausgebildet ist, bestehend aus einem Klemmsitz-Profildichtungselement (24) pro Randbereich in einer im wesentlichen schwalbenschwanzförmigen Ausgestaltung, wobei an einer Klemmplatte (25) mit elastischem Mittelsteg (26) zwei im wesentlichen keilförmige Schenkel (27, 28) mit dazwischen ausgespartem Kanal oder Tunnel (29) einstückig angebracht sind, zum Eingreifen in eine entsprechend ausgesparte, zur Aufnahme der beiden keilförmigen Schenkel (27, 28) dienende, im wesentlichen trapezförmige Nut (8) jeweils an einem Rande des Grundelementes (1), in welche zuvor ein zugeordneter Randbereich (3) der Membrane (2) eingefügt ist, ferner bestehend aus jeweils einem Klemmstab (30), der in den Kanal oder Tunnel (29) einschiebbar ist, zum Auseinandertreiben der in die randseitige Nut (8) des Grundelementes (1) jeweils eingesetzten keilförmigen Schenkel (27, 28) des Klemmsitz-Profildichtungselementes (24) und damit zur Bildung der klemmenden und dichtenden Verbindung.

10. Verteiler nach Anspruch 2,
dadurch gekennzeichnet,
daß das U-Profil der Klemmsitz-Profildichtungsleiste oder -Profildichtungsschiene (31) zwei ungleich dimensionierte, von einem U-Profil-Basisteil (31′) i. w. jeweils rechtwinklig weggerichtete, erste und zweite Schenkel (31'', 31''') aufweist, von denen der eine, kürzere Schenkel (31'') auf einen zugeordneten Randabschnitt der oberen, die Luftverteiler-Membrane (2) tragenden Seite des Grundelementes (1) und der andere, längere Schenkel (31''') auf einen gegenüberliegenden, zugeordneten Randabschnitt der unteren Seite des Grundelements (1) mit dem darüber geschlagenen Randbereich (3′) der Membrane (2) zu liegen kommt.

11. Verteiler nach Anspruch 10,
dadurch gekennzeichnet,
daß jeweils ein stirnseitiger Endabschnitt der Klemmsitz-Profildichtungsleiste oder -Profildichtungsschiene (31) mit vorsprungartigen Verlängerungsteilen (32, 33) versehen ist.

12. Verteiler nach Anspruch 11,
dadurch gekennzeichnet,
daß ein erstes Verlängerungsteil von dem ersten, kürzeren Schenkel (31'') des U-Profils ausgehend in der Längsrichtung der Klemmsitz-Profildichtungsleiste oder Profildichtungsschiene (31) dachartig vorspringt.

13. Verteiler nach Anspruch 11,
dadurch gekennzeichnet,
daß ein zweites Verlängerungsteil (33) von dem U-Profil-Basisteil (31′) ausgehend in der Längsrichtung der Klemmsitz-Profildichtungsleiste oder -Profildichtungsschiene (31) vorspringt.

14. Verteiler nach Anspruch 13,
dadurch gekennzeichnet,
daß das zweite Verlängerungsteil (33) fingerartig vorspringend ausgebildet ist und vorzugsweise ein abgerundetes Ende aufweist.

15. Verteiler nach Anspruch 14,
dadurch gekennzeichnet,
daß das zweite, fingerartig vorspringende Verlängerungsteil (33) länger ist als das erste, dachartig vorspringende Verlängerungsteil (32), wobei die beiden ersten und zweiten Verlängerungsteile (32, 33) i. w. rechtwinklig zueinander stehen.

16. Verteiler nach einem der vorhergehenden Ansprüche,
dadurch gekennzeichnet,
daß die über der Membrane (2) angeordneten, niederhaltenden Elemente (34) als selbsttragende Profile ausgebildet sind.

17. Verteiler nach Anspruch 16,
dadurch gekennzeichnet,
daß die niederhaltenden Elemente (34) in der Weise ausgebildet sind, daß sie gleichzeitig als Versteifungselemente bezüglich Grundelement (1) und Membrane (2) dienen.

18. Verteiler nach Anspruch 16 oder 17 ,
dadurch gekennzeichnet,
daß die niederhaltenden Elemente (34) in der Form von ersten Winkelprofilelementen ausgebildet sind.

19. Verteiler nach Anspruch 18,
dadurch gekennzeichnet,
daß die ersten Winkelprofilelemente (34) jeweils ein zur Oberfläche des Grundelements (1) parallel ausgerichtetes erstes Stegteil (34′) aufweisen, welches mit dem Grundelement (1) verschraubbar ist oder in ähnlicher Weise befestigbar, z. B. vernietbar, ist.

20. Verteiler nach Anspruch 18,
dadurch gekennzeichnet,
daß die ersten Winkelprofilelemente (34) jeweils ein von der Oberfläche des Grundelements (1) rechtwinklig abstehendes, zweites Stegteil (34'') aufweisen, dessen jeweiligen Endabschnitte (35) sich gegenüber dem Mittelabschnitt verjüngend ausgebildet sind, vorzugsweise keilförmig ausgebildet sind und eine zur Oberfläche der Membrane (2) winklig verlaufende, untere Kante (35′) aufweisen.

21. Verteiler nach einem der vorhergehenden Ansprüche,
dadurch gekennzeichnet,
daß auf der der Membrane (2) gegenüberliegenden unteren Oberfläche des Grundelements (1) separate Versteifungselemente (38) in Form von selbsttragenden Profilen angeordnet sind.

22. Verteiler nach Anspruch 21,
dadurch gekennzeichnet,
daß die Versteifungselemente (38) in der Form von zweiten Winkelprofilelementen ausgebildet sind.

23. Verteiler nach Anspruch 22,
dadurch gekennzeichnet,
daß die zweiten Winkelprofilelemente (38) jeweils ein zur unteren Oberfläche des Grundelements (1) paralleles Stegteil (38′) aufweisen, welches mit dem Grundelement (1) verschraubbar ist oder in ähnlicher Weise befestigbar z. B. vernietbar, ist.

24. Verteiler nach den Ansprüchen 18 - 23,
dadurch gekennzeichnet,
daß die zu den beiden einander gegenüberliegenden, oberen und unteren Oberflächen des Grundelementes (1) jeweils parallel ausgerichteten Stegteile (34′) bzw. (38′) der ersten bzw. zweiten Winkelprofilelemente (34) bzw. (38) durch die aus Grundelement (1) und Membrane (2) bestehende Anordnung hindurch miteinander verschraubbar oder in ähnlicher Weise befestigbar, z. B, vernietbar, sind.

25. Verteiler nach einem der vorhergehenden Ansprüche,
dadurch gekennzeichnet,
daß das Grundelement (1) und/oder das (die) Klemmsitz-Profildichtungselement(e)/-Leiste(n)/-Schiene(n) ( z. B. 9, 10; 19, 20; 31) und/oder das Korrektur-Profilelement (18) zumindest an den jeweils als Dichtflächen vorgesehenen Oberflächen zusätzlich mit Riffelungen (21; 22; 22′) und/oder mit Haftvermittlern versehen sind.

26. Verteiler nach Anspruch 25,
dadurch gekennzeichnet,
daß Riffelungen (22) in der Längsrichtung und/oder Riffelungen (22′) in der Querrichtung der Elemente vorgesehen sind.

27. Verteiler nach einem der Ansprüche 10 - 26
dadurch gekennzeichnet,
daß das U-Profil-Basisteil (31′) der KlemmsitzProfildichtungsleiste oder -Profildichtungsschiene (31) mit wenigstens einem zusätzlichen Winkelprofilelement (42 oder 43) einstückig verbunden ist, wodurch wenigstens eine Einstecknut zwischen einem der U-Schenkel (31'' bzw. 31''') der Klemmsitz-Profildichtungsleiste oder -Profildichtungsschiene (31) und einem hierzu parallelen Schenkel des zusätzlichen Winkelprofilelements gebildet ist, wobei diese Einstecknut zur Aufnahme der Endabschnitte der niederhaltenden Elemente (34) oder der Versteifungselemente (38) dienen.

28. Verteiler nach Anspruch 27,
dadurch gekennzeichnet,
daß die Klemmsitz-Profildichtungsleiste oder - Profildichtungsschiene (31) und ein zusätzliches Winkelprofilelement (42 oder 43) mit entsprechender Einstecknut durch ein doppeltes U-Profil gebildet sind.

29. Verteiler nach Anspruch 27,
dadurch gekennzeichnet,
daß die Klemmsitz-Profildichtungsleiste oder Profildichtungsschiene (31) und die beiden zusätzlichen Winkelprofilelemente (42 und 43) mit ihren entsprechenden Einstecknuten durch ein dreifaches U-Profil gebildet sind.

30. Verteiler nach einem der vorhergehenden Ansprüche,
dadurch gekennzeichnet,
daß zumindest die Klemmsitz-Profildichtungselemente aus einem glasfaserverstärkten Kunststoff bestehen.

## Claims

1. Gas distributor, air distributor in particular for blowing fine streams of air into water, with
- a solid, plate-like base element (1);
- a membrane (2) (= rubber, preforated gas or air distribution sheet or plate) disposed over the base element (1);
- an attachment device (4) for releasable, gas-tight connection of rim areas of the membrane (2) to corresponding rim areas of the base element (1) such that the membrane (2), in the absence of or with little gas, in particular air and/or O₂ supply, lies saturated on at least one surface of the base element (1);
- essentialy web-shaped elements over the membrane (2) and holding this down, on its surfaces in particular, which prevent the arching of the membrane (2) when gas, in particular air and/or O₂ is being supplied;
- the attachment device (4) including at least a U-shaped clasping area for clasping the membrane (2), in which the membrane (2) either holds a rim area of the plate-shaped base element (1) or lies somewhat U-shaped in a groove-like recess (3; 13) of the plate-like base element (1) and is also provided with a clamp-fitting profile sealing element (9, 10; 14, 15; 19, 20; 19', 20') which brings about at least two lines of clamping of the membrane (2) in essentially opposite clamping areas of the clasping area, when in operation, at the latest.

2. Distributor in accordance with claim 1,
wherein,
the clamp-fitting profile sealing element(s) is (are) developed as (an) essentially U-shaped clamp-fitting profile sealing strip(s) or (a) profile bar(s) (16) for clasping an in each case upper and lower peripheral edge (1', 1'') of the base element (1) with the edge area (3') of the membrane (2) extending over it.

3. Distributor in accordance with claim 1,
wherein,
the clamp-fitting profile sealing element(s) is (are) developed such that the associated edge area (3', 3'') of the membrane (2) can be fully or partly brought into contact with a recessed groove (8, 13) corresponding in each case with the edge area of the base element (1).

4. Distributor in accordance with claim 3,
wherein,
the clamp-fitting profile sealing element is developed in the form of a rounded rod-form (14) and can be inserted into a corresponding recessed clamping groove inside an associated area of the base element (1), with the edge area (3'') of the membrane (2) which is inserted there.

5. Distributor in accordance with claim 4,
wherein,
the rounded rod-form (14) runs along a bar (15) which in each case is proportioned so as to correspond to or be similar to the length of the long or side faces of the base element (1).

6. Distributor in accordance with claim 2,
wherein,
the attachment device (4) is developed as a component, comprising at least two clamp-fit profile sealing strips or bars (16, 17) per rim area, such that these clamp-fitting profile sealing strips or bars can be placed one on top of the other, holding the upper and lower peripheral edges of the base element (1) with the rim area of the membrane (2) which extends over the said peripheral edge of the base element (1).

7. Distributor in accordance with either claim 2 or 6,
wherein,
additionally at least one correction profile element (18, 18') for in each case attachment of rim areas to the base element (1) is provided and the clamp-fitting profile sealing element(s) (19, 20, 19', 20') is (are) developed in each case for at least partly holding the correction profile element (18, 18') to the rim area of the membrane (2) which is clasped by means of the correction profile element.

8. Distributor in accordance with claim 3,
wherein,
the attachment device (4) is developed as a component comprising at least two clamp-fitting profile sealing elements (9, 10) per rim area, such that these clamp-fitting profile sealing elements in each case have a reversed L-shaped cross-section with an essentially wedge-shaped side (9', 10') for locking in a symmetrical arrangement in a correspondingly recessed trapezoid groove (8) serving for the uptake of both wedge-shaped sides, the said groove being in each case in a rim of the base element (1), an associated rim area (3) of the base element (1) being previously fitted into the said groove, further comprising in each case a rod (12) which can be inserted into an intermediate space between the two sides (9', 10') to separate the wedge-shaped sides (9', 10') of both clamp fitting profile sealing elements inserted in each case into the rim groove (8) of the base element (1), and therefore forming clamping and sealing connection.

9. Distributor in accordance with claim 3,
wherein,
the attachment device (4) is developed as a component comprising a clamp-fitting profile sealing element (24) per rim area in an essentially dove-tailed shape, two essentially wedge-shaped sides (27, 28) with a recessed channel or tunnel between them being applied as a single element onto a clamping plate (25) with an elastic central web (26) for locking in a correspondingly recessed trapezoid groove (8) serving for the uptake of both wedge-shaped sides, the said groove being in each case in a rim of the base element (1), an associated rim area (3) of the base element (1) being previously fitted into the said groove, further comprising in each case a clamping bar (30) which can be slid into the channel or tunnel (29) to separate the wedge-shaped sides (27, 28) of the clamp fitting profile sealing element (24) inserted in each case into the rim groove (8) of the base element (1), and therefore forming a clamping and sealing connection.

10. Distributor in accordance with claim 2,
wherein,
the U-shaped element of the clamp-fitting profile sealing strip or bar (31) has two unequally sized sides (31'', 31''') directed at right-angles away from the base section of a U-shaped element, the shorter of which lies on an associated rim section of the upper side of the base element (1) that carries the air-distributor membrane (2), and the other longer side (31''') of which lies on an opposite, associated rim section of the lower side of the base element (1) with the rim area (3') of the membrane (2) extending over it.

11. Distributor in accordance with claim 10,
wherein,
in each case a front face end-section of the clamp-fitting profile sealing strip or bar (31) is provided with projection-like extension elements (32, 33).

12. Distributor in accordance with claim 11,
wherein,
a first extension element of the first, shorter side (31'') of the U-shaped element extends rooflike outwards in the lengthwise direction of the clamp-fitting profile sealing strip or bar (31).

13. Distributor in accordance with claim 11,
wherein,
a second extension element (33) of the base section of the U-shaped element (31') extends outwards in the lengthwise direction of the clamp-fitting profile sealing strip or bar (31).

14. Distributor in accordance with claim 13,
wherein,
the second extension element (33) is developed as a finger-like projection and preferably has a rounded end.

15. Distributor in accordance with claim 14,
wherein,
the second, finger-like projecting extension element (33) is longer than the first, rooflike projecting extension element (32), the first and second extension elements (32, 33) standing essentially at right-angles to each other.

16. Distributor in accordance with any of the preceding claims,
wherein,
the retaining elements (34) disposed over the membrane (2) are developed as self-supporting sections.

17. Distributor in accordance with claim 16,
wherein,
the retaining elements (34) are developed such that they simultaneously serve as reinforcing elements concerning the base element (1) and membrane (2).

18. Distributor in accordance with either claim 16 or claim 17,
wherein,
the retaining elements (34) are developed in the form of first angled-profile elements.

19. Distributor in accordance with claim 18,
wherein,
the first angled-profile elements (34) in each case have a web section (34') which is aligned parallel to the surface of the base element (1) and which can be bolted to the base element (1) or can be attached in a similar way, by rivetting for example.

20. Distributor in accordance with claim 18,
wherein,
the first angled-profile elements in each case have a second web section (34'') standing away from the surface of the base element (1) at a right-angles to the said base element (1), and the end sections (35) of the said second web section in each case are developed so as to taper in relation to the central section and are preferably developed wedge-shaped and have a lower edge (35') running at an angle to the surface of the membrane (2).

21. Distributor in accordance with any of the preceding claims,
wherein,
separate reinforcing elements (38) in the form of self-supporting sections are disposed on the underside of the base element (1) which lies opposite the membrane (2).

22. Distributor in accordance with claim 21,
wherein,
the reinforcing elements (38) are developed in the form of second angled-profile elements.

23. Distributor in accordance with claim 22,
wherein,
the second angled-profile elements (38) all have a web section (38'), which can be bolted to the base element (1) or attached to the said base element (1) in a similar way such as rivetting, parallel to the underside of the base element (1).

24. Distributor in accordance with claims 18 to 23,
wherein,
the opposite web sections (34') or (38'), of the upper and lower surfaces of the base element (1), of the first or second angled-profile elements (34) or (38) which are always aligned parallel to each other can be bolted to each other, or attached to each other in a similar way such as through the use of rivets, through the arrangement comprising a base element (1) and a membrane (2).

25. Distributor in accordance with any of the preceding claims,
wherein,
the base element (1) and/or the clamp-fitting profile sealing element(s)/strip(s)/bar(s) (e.g. 9, 10; 19, 20; 31) and/or the correction profile element (18) are at least additionally provided with corrugations (21; 22; 22') and/or with adhesives on the surfaces provided in each case as sealing surfaces.

26. Distributor in accordance with claim 25,
wherein,
corrugations (22) in the lengthwise and/or crosswise direction, in relation to the element, are provided.

27. Distributor in accordance with any one of claims 10 to 26,
wherein,
the U-shaped element (31') of the clamp-fitting profile sealing strip or clamp-fitting profile sealing bar (31) is connected as a single piece with at least one additional angled-profile element (42 or 43), forming at least one insertion groove between one of the U-sides (31'' or 31''') of the clamp-fitting profile sealing strip or clamp-fitting profile sealing bar (31) and a side of the additional angled-profile element parallel to this, the said insertion groove serving for the uptake of the end sections of the retaining elements (34) or the reinforcing elements (38).

28. Distributor in accordance with claim 27,
wherein,
the clamp-fitting profile sealing strip or clamp-fitting profile sealing bar (31) and an additional angled-profile element (42 or 43) with corresponding insertion groove are formed by a double U-shaped profile.

29. Distributor in accordance with claim 27,
wherein,
the clamp-fitting profile sealing strip or clamp-fitting profile sealing bar (31) and the two additional angled-profile elements (42 and 43) with their corresponding insertion grooves are formed by a three-fold U-shaped profile.

30. Distributor in accordance with any of the preceding claims,
wherein,
at least the clamp-fitting profile sealing elements are made of a synthetic material reinforced by glass-fibre.

## Revendications

1. Distributeur de gaz, notamment distributeur d'air permettant l'aération de l'eau au moyen de fines bulles, comprenant :
- un élément de base (1), solide et en forme de plaque,
- une membrane (2) (= feuille ou plaque distributrice de gaz ou d'air, perforée et à élasticité du type de celle du caoutchouc) disposée par-dessus l'élément de base (1),
- un dispositif de fixation (4) permettant de fixer des zones marginales de la membrane (2) sur des zones marginales correspondantes de l'élément de base (1), d'une manière amovible et étanche aux gaz, de façon telle que, lorsque l'alimentation en gaz, notamment en air et/ou en O₂, est absente ou réduite, la membrane (2) repose à plat sur au moins une surface de l'élément de base (1),
- et des éléments de maintien, pratiquement en forme de barre, qui sont disposés par-dessus la membrane (2), notamment sur sa surface, et qui empêchent un bombement de la membrane (2) lors d'une alimentation en gaz, notamment en air et/ou en O₂,
- le dispositif de fixation (4) entourant au moins une zone d'enveloppement de la membrane (2), au moins en forme de U, dans laquelle la membrane (2) soit entoure une zone marginale de l'élément de base (1) en forme de plaque, soit est appliquée, approximativement en forme de U, au fond d'un évidement en forme de rainure (3 ; 13) de l'élément de base (1) en forme de plaque, et dans laquelle il est prévu un élément profilé d'étanchéité à ajustement bloqué (9, 10 ; 14, 15 ; 19, 20 ; 19', 20') qui assure, au plus tard dans l'état de fonctionnement, au moins deux serrages de la membrane (2) qui sont de forme rectiligne et sont situés dans des zones de serrage de la zone d'enveloppement qui ont une disposition pratiquement opposée.

2. Distributeur suivant la revendication 1, caractérisé en ce que le ou les éléments profilés d'étanchéité à ajustement bloqué sont réalisés sous la forme d'une ou de baguettes profilées d'étanchéité ou rails profilés d'étanchéité à ajustement bloqué (16) en forme de U et servant à entourer chacun une arête de bord périphérique supérieure (1') et une arête de bord périphérique inférieure (1'') de l'élément de base (1) qui sont enveloppées par une zone marginale (3') de la membrane (2).

3. Distributeur suivant la revendication 1, caractérisé en ce que le ou les éléments profilés d'étanchéité à ajustement bloqué sont réalisés de façon à pouvoir être amenés en prise chacun avec une rainure (8, 13) associée qui est ménagée dans la zone marginale correspondante de l'élément de base (1) et dans laquelle la zone marginale associée (3', 3'') de la membrane (2) a été au préalable entièrement ou partiellement insérée.

4. Distributeur suivant la revendication 3, caractérisé en ce que l'élément profilé d'étanchéité à ajustement bloqué est réalisé sous la forme d'une baguette de forme ronde (14) et est agencé de façon à pouvoir être emboîté dans une rainure de serrage (13) associée qui est ménagée à l'intérieur d'une zone marginale correspondante de l'élément de base (1) et dans laquelle la zone marginale (3'') de la membrane (2) est insérée.

5. Distributeur suivant la revendication 4, caractérisé en ce que la baguette de forme ronde (14) est située le long d'une barre (15) dont les dimensions sont identiques ou analogues à celles de la surface latérale de l'élément de base (1) qui lui correspond dans le sens de la longueur ou de la largeur.

6. Distributeur suivant la revendication 2, caractérisé en ce que le dispositif de fixation (4) est réalisé sous la forme d'un groupe de pièces qui est constitué d'au moins deux baguettes profilées d'étanchéité ou rails profilés d'étanchéité à ajustement bloqué (16, 17), par zone marginale ces baguettes profilées d'étanchéité ou rails profilés d'étanchéité à ajustement bloqué étant agencés de façon à pouvoir être posés l'un au-dessus de l'autre, en entourant l'arête de bord périphérique supérieure et l'arête de bord périphérique inférieure de l'élément de base (1) qui sont enveloppées par une zone marginale (3') de la membrane (2).

7. Distributeur suivant l'une des revendications 2 et 6, caractérisé en ce qu'il est en outre prévu au moins un élément profilé correcteur (18, 18') destiné à être fixé sur l'élément de base (1) à l'endroit d'une zone marginale pour chacun et en ce que, pour chaque élément profilé correcteur (18, 18'), le ou les éléments profilés d'étanchéité à ajustement bloqué (19, 20, 19', 20') sont agencés de façon à entourer au moins partiellement cet élément profilé correcteur (18, 18') par-dessus lequel la zone marginale (3''')de la membrane (2) est repliée.

8. Distributeur suivant la revendication 3, caractérisé en ce que le dispositif de fixation (4) est réalisé sous la forme d'un groupe de pièces qui comprend, pour chaque zone marginale, au moins deux éléments profilés d'étanchéité à ajustement bloqué (9, 10) qui comportent chacun une section transversale de profilé en L retourné et présentant une aile (9', 10') pratiquement en forme de coin et qui sont destinés à s'emboîter suivant un agencement symétrique dans une rainure (8), de forme pratiquement trapézoïdale, qui est située sur un bord correspondant de l'élément de base (1) et sert à loger les deux ailes en forme de coin et dans laquelle une zone marginale (3) correspondante de la membrane (2) a été au préalable insérée, ledit groupe de pièces comportant en outre une baguette de forme ronde (12) qui est agencée de façon à pouvoir être insérée dans un intervalle (11) séparant les deux ailes (9', 10') et qui est destinée à écarter l'une de l'autre les ailes en forme de coin (9', 10') des deux éléments profilés d'étanchéité à ajustement bloqué qui sont chacune insérées dans la rainure (8) de l'élément de base (1) située à l'endroit du bord, cette baguette de forme ronde (12) servant ainsi à former la fixation assurant serrage et étanchéité.

9. Distributeur suivant la revendication 3, caractérisé en ce que le dispositif de fixation (4) est réalisé sous la forme d'un groupe de pièces qui comprend, pour chaque zone marginale, un élément profilé d'étanchéité à ajustement bloqué (24), pratiquement en forme de queue-d'aronde et comportant une plaque de serrage (25) qui présente une âme centrale élastique (26) et sur laquelle sont disposées, venues d'une seule pièce, deux ailes (27, 28) pratiquement en forme de coin entre lesquelles un conduit ou tunnel (29) est ménagé et qui sont destinées à s'emboîter dans une rainure (8) de forme pratiquement trapézoïdale, ménagée d'une manière appropriée, qui est située sur un bord correspondant de l'élément de base (1) et sert à loger les deux ailes en forme de coin (27, 28) et dans laquelle une zone marginale (3) correspondante de la membrane (2) a été au préalable insérée, ledit groupe de pièces comportant en outre une baguette de serrage (30) qui est agencée de façon à pouvoir être introduite de manière coulissante dans le conduit ou tunnel (29) et qui est destinée à écarter l'une de l'autre les ailes en forme de coin (27, 28) de l'élément profilé d'étanchéité à ajustement bloqué (24) qui sont chacune insérées dans la rainure (8) de l'élément de base (1) située à l'endroit du bord, cette baguette de serrage (30) servant ainsi à former la fixation assurant serrage et étanchéité.

10. Distributeur suivant la revendication 2, caractérisé en ce que le profil en U de la baguette profilée d'étanchéité ou rail profilé d'étanchéité à ajustement bloqué (31) comporte deux ailes (31'', 31'''), de dimensions différentes, qui s'éloignent chacune d'une partie de base (31') du profilé en U d'une manière essentiellement perpendiculaire et dont la première aile (31''), plus courte, vient prendre appui sur une section marginale associée de la face supérieure de l'élément de base (1) qui porte la membrane distributrice d'air (2), tandis que la seconde aile (31'''), plus longue, vient prendre appui sur une section marginale associée, opposée, de la face inférieure de l'élément de base (1), la zone marginale (3'') de la membrane (2) enveloppant ces sections marginales.

11. Distributeur suivant la revendication 10, caractérisé en ce qu'une section extrême, à disposition frontale, de chaque baguette profilée d'étanchéité ou rail profilé d'étanchéité à ajustement bloqué (31) est pourvue de parties de prolongement (32, 33) en forme de saillie.

12. Distributeur suivant la revendication 11, caractérisé en ce qu'une première partie de prolongement fait saillie en forme de toit à partir de la première aile (31''), plus courte, du profilé en U et suivant la direction longitudinale de la baguette profilée d'étanchéité ou rail profilé d'étanchéité à ajustement bloqué (31).

13. Distributeur suivant la revendication 11, caractérisé en ce qu'une seconde partie de prolongement (33) fait saillie à partir de la partie de base (31') du profilé en U et suivant la direction longitudinale de la baguette profilée d'étanchéité ou rail profilé d'étanchéité à ajustement bloqué (31).

14. Distributeur suivant la revendication 13, caractérisé en ce que la seconde partie de prolongement (33) fait saillie en forme de doigt et comporte de préférence une extrémité arrondie.

15. Distributeur suivant la revendication 14, caractérisé en ce que la seconde partie de prolongement (33), qui fait saillie en forme de doigt, est plus longue que la première partie de prolongement (32) qui fait saillie en forme de toit, les deux parties de prolongement (32, 33) étant essentiellement perpendiculaires l'une à l'autre.

16. Distributeur suivant l'une des revendications précédentes, caractérisé en ce que les éléments de maintien (34), qui sont disposés par-dessus la membrane (2), sont réalisés sous la forme de profilés autoporteurs.

17. Distributeur suivant la revendication 16, caractérisé en ce que les éléments de maintien (34) sont agencés de façon à servir en même temps d'éléments de renforcement vis-à-vis de l'élément de base (1) et de la membrane (2).

18. Distributeur suivant l'une des revendications 16 et 17, caractérisé en ce que les éléments de maintien (34) sont réalisés sous la forme de premières cornières.

19. Distributeur suivant la revendication 18, caractérisé en ce que les premières cornières (34) comportent chacune une première aile (34') parallèle à la surface de l'élément de base (1) et agencée de façon à pouvoir être vissée, ou fixée d'une autre manière, par exemple rivetée, sur cet élément de base (1).

20. Distributeur suivant la revendication 18, caractérisé en ce que les premières cornières comportent chacune une seconde aile (34'') qui fait saillie perpendiculairement à la surface de l'élément de base (1) et dont des tronçons extrêmes (35) vont en rétrécissant par rapport au tronçon central, en étant de préférence réalisés en forme de coin, et comportent une arête inférieure (35') faisant un angle vis-à-vis de la surface de la membrane (2).

21. Distributeur suivant l'une des revendications précédentes, caractérisé en ce que des éléments séparés de raidissement (38), se présentant sous la forme de profilés autoporteurs, sont disposés sur la surface inférieure de l'élément de base (1) qui est située à l'opposé de la membrane (2).

22. Distributeur suivant la revendication 21, caractérisé en ce que les éléments de raidissement (38) sont réalisés sous la forme de secondes cornières.

23. Distributeur suivant la revendication 22, caractérisé en ce que les secondes cornières (38) comportent chacune une aile (38') parallèle à la surface inférieure de l'élément de base (1) et agencée de façon à pouvoir être vissée, ou fixée d'une autre manière, par exemple rivetée, sur cet élément de base (1).

24. Distributeur suivant l'une des revendications 18 à 23, caractérisé en ce que les ailes (34') des premières cornières (34) et les ailes (38') des secondes cornières (38) qui sont respectivement parallèles aux deux surfaces, supérieure et inférieure, de l'élément de base (1) qui sont situées à l'opposé l'une de l'autre sont agencées de façon à pouvoir être vissées, ou fixées d'une autre manière, par exemple rivetées, les unes sur les autres, à travers l'ensemble formé de l'élément de base (1) et de la membrane (2).

25. Distributeur suivant l'une des revendications précédentes, caractérisé en ce que l'élément de base (1) et/ou la ou les baguettes profilées d'étanchéité ou rails profilés d'étanchéité à ajustement bloqué (par exemple 9, 10 ; 19, 20 ; 31) et/ou l'élément profilé correcteur (18) sont pourvus en sus de cannelures (21 ; 22 ; 22') et/ou de moyens d'adhérence au moins sur chacune des surfaces prévues comme surfaces d'étanchéité.

26. Distributeur suivant la revendication 25, caractérisé en ce qu'il est prévu des cannelures (22) suivant la direction longitudinale et/ou des cannelures (22') suivant la direction transversale des éléments.

27. Distributeur suivant l'une des revendications 10 à 26, caractérisé en ce que la partie de base (31') du profilé en U de la baguette profilée d'étanchéité ou rail profilé d'étanchéité à ajustement bloqué (31) est réalisée d'une seule pièce avec au moins une cornière (42 ou 43) supplémentaire, de sorte qu'au moins une rainure d'emboîtement est formée entre l'une des ailes (31'' ou 31''') du U de la baguette profilée d'étanchéité ou rail profilé d'étanchéité à ajustement bloqué (31) et une aile de la cornière supplémentaire qui est parallèle à cette aile de la baguette ou rail, cette rainure d'emboîtement servant à loger les tronçons extrêmes des éléments de maintien (34) ou des éléments de raidissement (38).

28. Distributeur suivant la revendication 27, caractérisé en ce que la baguette profilée d'étanchéité ou rail profilé d'étanchéité à ajustement bloqué (31) et une cornière supplémentaire (42 ou 43), avec sa propre rainure d'emboîtement, sont constituées par un profilé en double U.

29. Distributeur suivant la revendication 27, caractérisé en ce que la baguette profilée d'étanchéité ou rail profilé d'étanchéité à ajustement bloqué (31) et les deux cornières supplémentaires (42 et 43), avec leurs propres rainures d'emboîtement, sont constituées par un profilé en triple U.

30. Distributeur suivant l'une des revendications précédentes, caractérisé en ce qu'au moins les éléments profilés d'étanchéité à ajustement bloqué sont en matière plastique renforcée de fibre de verre.
